Europäisches Patentamt

European Patent Office

Office européen des brevets

(11) Publication number: **0 193 666**
**A1**

# EUROPEAN PATENT APPLICATION

(21) Application number: **85301522.0**

(22) Date of filing: **05.03.85**

(51) Int. Cl.⁴: **C 10 L 5/46**

(43) Date of publication of application: **10.09.86**
**Bulletin 86/37**

(84) Designated Contracting States: **DE FR GB IT**

(71) Applicant: **Matsuzaki, Tsutomu, 2-38-3 Nokata, Nakano-ku, Tokyo (JP)**

(72) Inventor: **Matsuzaki, Tsutomu, 2-38-3 Nokata, Nakano-ku, Tokyo (JP)**

(74) Representative: **Ablewhite, Alan James et al, MARKS & CLERK 57/60 Lincoln's Inn Fields, London WC2A 3LS (GB)**

(54) Method and equipment of manufacturing fuel from waste refuse.

(57) The invention provides a method and an equipment for manufacturing solid fuel used for a boiler, a stove, etc. from waste refuse made by removing incombustibles such as metal, etc. from industrial waste such as shredder dust remaining after recovery of scrap iron which is made by shredding scrapped vehicles and including rubber, synthetic resin material, etc., domestic waste, raw refuse, etc. by melting at the temperature of 150°C~ 380°C with additives acting as a solidifying agent, a supporter of combustion and a counteractive, removing harmful substance by gasification thereof and solidifying the melt (from which the harmful substance has been eliminated) with cooling water of pH 8~10.

Furthermore, in the invention, the cooling water of pH 8~10 for solidifying the melt and water used for transfer of the product to a product yard are reused by circulation and therefore water is never discharged out of the equipment. Supplement of water is required only in case of lack of water.

0193666

## METHOD and EQUIPMENT of MANUFACTURING FUEL from WASTE REFUSE

The invention relates to a method and an equipment of manufacturing fuel from waste refuse made by removing noncombustible matter such as metal, etc. from industrial waste such as shredder dust, etc. domestic waste, raw refuse, etc. gathered from common homes, etc.

Up to now, each of combustible, noncombustible, and incombustible synthetic resin materials contained in industrial waste such as shredder dust is dumpped and disposed at a landfil site by investing money in it. It was considered to burn down the combustible synthetic resin material, however it was impossible to burn down it because it was afraid to cause an environmental pollution by generating harmful gas such as hydrogen chloride (Hcl), phosgene ($COcl_2$), hydrogen cyanide (HCN), formaldehyde (HCHO), etc. and black smoke during burning of it. It also had fault that it was necessary to settle the problems of the thermal resistance against high combustion temperature in

- 1 -

the combustion furnace and corrosiveness caused by the harmful gas.

And also it had faults such as causing an environmental pollution, etc. by remaining of compounds of palladium (Pd), cadmium (Cd), barium (Ba), zinc (Zn), etc. in the ash contents produced in case of burning polyvinyl chloride, etc. containing harmful metals such as lead stearate, cadmium, etc.

For the above reasons, it had a fault that it was difficult to burn the noncombustible and incombustible synthetic resins and impossible to dispose of them by the method except dumpping at a landfil site.

As the raw refuse gathered from common homes contains not only a large quantity of synthetic resin, vinyl, etc. but also a large quantity of water, it was necessary to burn it after drying or by using heavy oil and so in either case it had faults that it costed about 8,000~15,000 yen per 1 ton of raw refuse in Japan for disposal of it and also harmful gas was generated during burning of it.

It is the principal object of the invention to provide a fuel manufacturing method of being able to manufacture a fuel of high calorific value from waste refuse made by removing noncombustible matter such as metal, etc. from industrial waste such as shredder dust, etc., domestic waste, raw refuse, etc. gathered from common homes, etc. under the condition without generation of harmful gas and/ or black smoke during burning of it and remaining harmful metal in ash contents, in view of the faults of the prior arts as mentioned above.

Briefly, the invention comprises the steps of

(i) heating and melting waste refuse made by removing noncombustible matter such as metal, etc. from industrial waste such as shredder dust, etc. domestic waste, raw refuse, etc. in a melting equipment under the condition of adding an additive acting as a solidifying agent, a supporter of combustion and a counteractive and removing harmful substance by gasification from it,

(ii) solidifying by cooling the melt from which the harmful gas has been removed in the melting equipment in a cooling tank in which cooling water of pH 8~10 is received,

(iii) transferring the fuel made up by cooling with the cooling water to a product yard,

and

(iv) circulating the cooling water from the product yard to the cooling tank passing through an additive receiving tank and keeping pH 8~10 of the cooling water.

A further object of the invention is to provide a fuel manufacturing equipment comprising:

(i) a melting equipment for heating and melting waste refuse made by removing nomcombustible matter such as metal, etc. from industrial waste such as shredder dust. etc., domestic waste, raw refuse, etc. under the condition of adding an additive acting as a solidifying agent, a

— 4 —

supporter of combustion and a counteractive and removing harmful substance by gasification from it,

(ii) a cooling tank for cooling and solidifying the melt from which the harmful gas has been removed in the melting equipment by water of pH 8~10.

and

(iii) a transfer equipment of the fuel made up by cooling in the cooling tank to a product yard.

The invention will now be described with reference to the accompanying drawings wherein:

Fig. 1 is an explanatory schematic drawing showing an example of the invention.

Fig. 2 is an explanatory drawing showing a hard waste feeder.

Fig. 3 is an explanatory drawing showing a melting equipment.

The invention will now be explained particularly with reference to the embodiments illustrated in the drawings as follows.

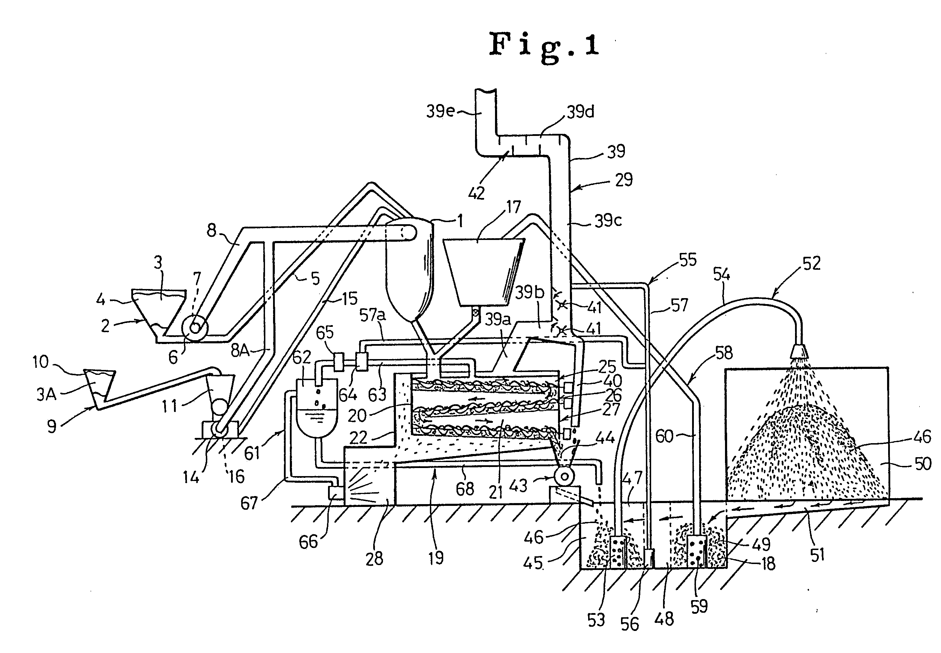

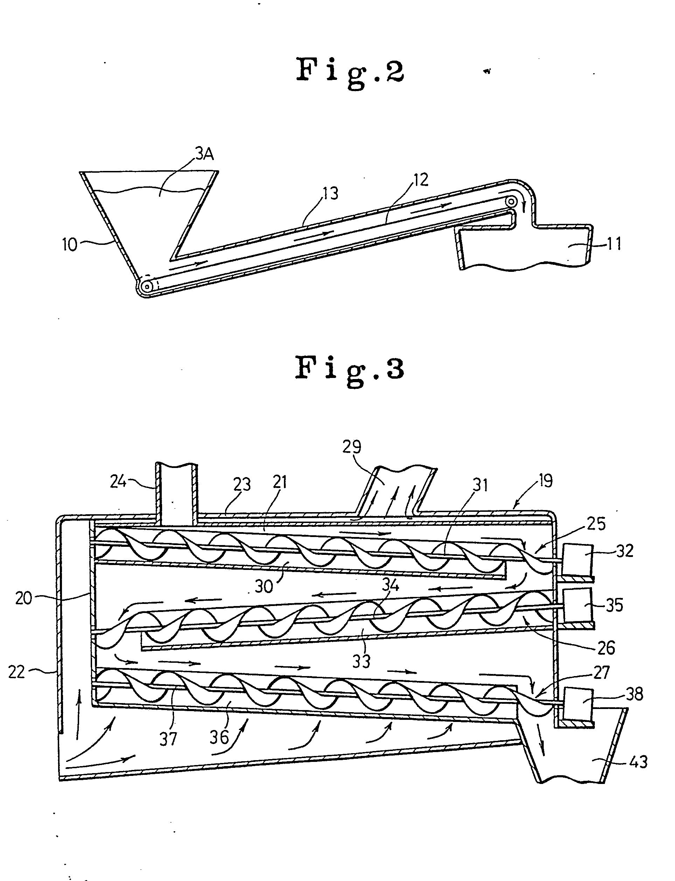

Referring to the embodiment shown in Figs. 1-3 inclusive, numeral 1 designates a receiving tank in which waste refuse is received. 2 designates a soft waste feeder for feeding soft waste 3 made by removing noncombustible matter such as metal, etc. from industrial waste such as shredder dust, etc., domestic waste, raw refuse, etc. gathered from common homes, etc. and containing a synthetic resin material, vinyl, etc. The soft waste feeder 3 comprises a receiving bucket 4 for receiving the soft waste 3, a transfer pipe 5 connecting between the receiving bucket 4 and the receiving tank 1 for transferring the soft waste 3, a blower 6 installed midway of the transfer pipe 5 for transferring the soft waste 3 in the receiving bucket 4 to the receiving tank 1 by blowing, an air duct 8 connected to the receiving tank 1 at one end and to an intake 7 of the blower 6 at another end. 9 designates a hard waste feeder for feeding a hard waste 3A made by removing noncombustible matter such

0193666

as metal, etc., from industrial waste such as shredder dust, etc., domestic waste, raw fefuse, etc. gathered from common homes, etc. and containing synthetic resin material, etc. The hard waste feeder 9 comprises a receiving bucket 10 for receiving the hard waste 3A, a conveyor type transfer equipment 12 for transferring the hard waste 3A received in the receiving bucket 10 to a shredding equipment 11 as shown in Fig. 2, a hood 13 covering the circumference of the transfer equipment 12 for preventing the scattering of dust, a transfer pipe 15 furnished with a blower 14 for air transportation of the hard waste 3A shredded to small particle by the shredding equipment 11 to the receiving tank 1 and an air duct 8A connected with the air duct 8A at one end and an intake 16 of the blower 14 at another end.
17 designates an additive receiving tank for receiving an additive 18. The additive 18 is possible to solidify the wastes 3, 3A and also act as a supporter of combustion and a counteractive on the wastes 3, 3A. For example, the additives which are

- 7 -

made by distribution of some of waste oil, heavy oil asphalt(AS), sp220, pitch, fine coal, poor-grade coal, magnesium(Mg), antimony(Sb), calcium oxide(CaO), calcium hydroxide $Ca(OH)_2$, silicic acid, etc. at the fixed portion are used.

19 designates a melting equipment installed below the receiving tank 1 and the additive receiving tank 17. The melting equipment 19 comprises a melting equipment proper 22 which has a heating chamber 21 enclosed with wall surfaces 20 on 4 sides, a connecting pipe 24 between the lower parts of the receiving tank 1 and the additive receiving tank 17 installed at a little to one end of an upper wall surface 23 of the melting equipment proper 22 and the heating chamber 21, a No.1 transfer equipment 25 for transferring the soft waste 3, the hard waste 3A, and the additive 18 led through the connecting pipe 24 into the heating chamber 21 to the other end of the inside of the heating chamber 21 in approximately 15 minutes while drying at the temperature of 150°C~200°C for example, a No.2 transfer equipment 26 for transferring the substance transferred by the No. 1
transfer equipment 25 to one end
portion inside the heating chamber 21
in about 10 minutes while preheating
at the temperature of 200℃~250℃ for
example, a No. 3 transfer equipment 27
for transferring the substance
transferred by the No. 2 transfer
equipment 26 to another end portion
inside the heating chamber 21 in about
7 minutes while melting by heating at
the temperature of 250℃~380℃ for
example, a combustion furnace 28
installed at a little lower portion of
one end of the melting equipment
proper 22 and having a combustion
burner 66 for heating the heating
chamber 21 and a chimney 29 installed
at nearly central portion of the top
surface of the melting equipment
proper 22.

The No. 1 transfer equipment 25
comprises a guide plate 30 shaped like
a semicircular arc in section which is
installed at the upper position of the
melting equipment proper 22 to be
inclined downwards from one end to
another end, a spiral screw 31
installed to be rotatable inside the
guide plate 30 and an driving gear 32 for driving the rotation of the spiral screw 31. As the driving gear 32 it is allowed to use the motor, the reduction gear, etc. (not illustrated) used generally up to now.

The No. 2 transfer equipment 26 comprises a guide plate 33 shaped like a semicircular arc in section which is possible to receive the substance transferred by the No. 1 transfer equipment 25 and falling at the lower end of the No. 1 transfer equipment 25 and installed to be inclined downwards from one end to another end, a spiral screw 34 installed to be rotatable inside the guide plate 33 and a driving gear 35 for driving the rotation of the spiral screw 24. As the driving gear 35, it is allowed to use the motor, the reduction gear, etc. (not illustrated) used generally up to now or the equipment which is constructed to interlock with the driving gear 32.

The No. 3 transfer equipment 27 comprises a guide plate 36 shaped like a semicircular arc in section which is possible to receive the substance transferred by the No. 2 transfer equipment 26 and falling at the lower end of the No. 2 transfer equipment 26 and installed to be inclined downwards from one end to another end, a spiral screw 37 installed to be rotatable inside the guide plate 36 and a driving gear 38 for driving the rotation of the spiral screw 37. As the driving gear 38, it is allowed to use the motor, the reduction gear, etc. (not illustrated) used generally up to now or the equipment which is constructed to interlock with the driving gear 32.

It is possible to make the melting equipment 19 that plural numbers of the No. 1 transfer equipments 25, the No. 2 transfer equipments 26 and the No. 3 transfer equipments 27 are arranged respectively.

The chimney 29 comprises a chimney proper 39 consinsting of an inclined part 39a projected in the inclined upward direction from the melting equipment 22, a projecting part 39b end of which is projected to incline downward, a vertical part 39c projected from the end of the projected part 39b, a horizontal part 39d projected from the upper end of the vertical part 39c in the nearly horizontal direction and an upper end part 39e projected upward from the end of the horizontal part 39d, an exhaust pipe 40 projected downward from the lower end of the projecting part 39b of the chimney proper 39, scrubbers 41, 41 installed at the lower position inside the vertical part 39c of the chimney proper 39 to be rotatable, a mist separator 42 installed at the horizontal part 39d of the chimney proper 39.

43 designates a mixer (a granulator) for shredding the melt transfered by the No. 3 transfer equipment 27 and then fallen down to the granulated substance. 45 designates a cooling tank receiving granulated substance 46 exhausted from the mixer 43 and cooling water 47 of pH 8~10 for cooling the granulated substance 46. 48 designates a cooling water receiving tank connected with the cooling tank 45 not to allow penetration of the granulated substance 46. 49 designates an additive tank connected with the cooling water receiving tank 48 for receiving the additive 18.

50 designates a product storage (a product yard) for receiving the granulated product (fuel) 46 cooled in the cooling tank 45. 51 designates a water shoot which is made at the bottom of the product storage 50 and connected with the additive tank 49. 52 designates a transfer equipment for transferring the granulated substance 46 cooled in the cooling tank 45 with cooling water 47 to the product storage 50. The transfer equipment 52 comprises a water supply pump 53 installed inside the cooling tank 45 and a transfer pipe 54 connected with the water supply pump 53 at one end and has an outlet at another end above the product storage 50.

55 designates a water supply equipment for supplying the cooling water 47 in the cooling water receiving tank 48 into the vertical part 39c of the chimney proper 39. The water supply equipment 55 comprises a pump 56 installed inside the cooling water receiving tank 48 and a hose 57 connected with the outlet of the pump 56 at one end and the scrubbers 41, 41 at the vertical part 39c of the chimney proper 39 at another end. 58 designates a transfer equipment for transferring the additive 18 in the additive tank 49 into the additive receiving tank 17. The transfer equipment 58 comprises a water supply pump 59 installed in the additive tank 49 and a transfer pipe 60 connected with the outlet of the water supply pump 59 at one end and the additive receiving tank 17 at another end.

61 designates a gas recovery equipment. The gas recovery equipment 61 comprises a recovery tank 62, a pipe 63 connected with the recovery tank 62 and the inside of the heating chamber 21 at another end, a desulfurizing equipment 64 which is installed midway of the pipe 63 and a water is supplied from a hose 57a connected with the hose 57 of the water supply equipment 55 thereto, a blower 65 and a pipe 67 leading a gas which is recovered in the recovery tank 62 to the combustion burner 66 of the combustion furnace 28. The water recovered in the recovery tank 62 is returned to the cooling tank 45 through a hose 68.

In the fuel manufacturing equipment of the above construction, the soft waste 3 and the hard waste 3A are received by the operation of the soft waste feeder 2 and the hard waste feeder 9. At this time, although the soft waste 3 and the hard waste 3A are transferred by the blowers 6 and 14, the air sent to the receiving tank 1 is led to the intakes 7 and 16 of the blowers 6 and 14 by the air ducts 8 and 8A. Therefore, it has neither leakage of the harmful substance to the outside nor air pollution of the circumstances. On the other hand, the additive 18 received in the additive tank 49 is transferred to the additive receiving tank 17 by the operation of the transfer equipment 58 and received in the additive receiving tank 17.

Then, the heating chamber 21 is heated up by the combustion at the combustion furnace 28. The No. 1 transfer equipment 25, the No. 2 transfer equipment 26 and the No. 3 transfer equipment 27 are driven. The fixed quantities of the soft waste 3 and the hard waste 3A from the receiving tank 1 and the additive 18 from the additive receiving tank 17 are thrown by falling onto the guide plate 30 of the No. 1 transfer equipment 25 in order at the fixed rate. The soft waste 3, the hard waste 3A and the additive 18 thrown by falling onto the guide plate 30 are transferred to the other place in order. And also the soft waste 3, the hard waste 3A and the additive 18 are mixed. During the transfer of the No. 1 transfer equipment 25 the mixture is dried up by heating at 150℃~200℃ in about 15 minutes. The mixture is transferred by the No. 1 transfer equipment 25 with drying and also transferred to the other place in order by the screw 34 heating at 200℃~250℃ in about 10 minutes after the throwing by falling onto the guide plate 33 of the No. 2 transfer equipment 26. The mixture is transferred by the No. 2 transfer equipment 26 with heating and also transferred to the other place in order by the screw 37 melting by heating at 250℃~380℃ in about 7 minutes after the throwing by falling onto the guide plate 36 of the No. 3 transfer equipment 27 and then discharged to the mixer 43.

A harmful gas generated when the mixture is transferred by the No. 1 transfer equipment 25, the No. 2 transfer equipment 26 and the No.3 transfer equipment 27 is recovered by the gas recovery equipment 61. The recovered gas is led to the combustion burner to be burned and the water used for desulfurization is returned to the cooling tank 45 through the hose 68. The exhaust gas discharged from the chimney 29 is cleaned by the scrubbers 41, 41 to which the water of pH 8~10 is supplied by the water supply equipment 55 for the purpose of removing soot and smoke and desulfurization and made to separate the mist by the mist separator 42. So it is possible to make the state of non-environmental pollution perfectly. The water used by the scrubbers 41, 41 is led to the mixer 43 through the exhaust pipe 40 and then returned to the cooling tank 45.

The melt 44 led to the mixer 43 is shredded to granulated substance by the mixer 43 and thrown into the cooling tank 45 receiving the cooling water 47 of pH 8 ~10 to be cooled. By the granulated substance 46 thrown into the cooling tank 45, the pH of the cooling water in the cooling tank 45 changes to 5~6. After the granulated substance 46 has been cooled in the cooling tank 45, the granulated substance (fuel) 46 with the cooling water is transferred to the product storage 50 by the transfer equipment 52. At the product storage 50, the granulated substance (fuel) 46 is piled up and the cooling water is led to the additive tank 49 through the water shoot 51. The cooling water pH of which is changed from 5~6 to 8~10 in the additive tank 49 is led to the cooling water receiving tank 48 and the cooling tank 45.

In the fuel manufacturing equipment of the above construction, it is economical because all water used in the above fuel manufacturing equipment is recovered to the cooling tank 45, the cooling water receiving tank 48 and the additive tank 49 and also it does not cause harm to the public because the cooling water polluted is not discharged from the system. And also the harmful gas has never been discharged from the system because the harmful gas generated at the melting equipment is desulfurized at the gas recovery equipment 61 and then led to the combustion burner 66
and burned

As will be apparent from the
aforesaid explanations, the invention
has many effects as listed below.

(1) As it has a melting equipment
for heating and melting waste
refuse made by removing
noncombustible matter such as
metal, etc. from industrial waste
such as shredder dust, etc.,
domestic waste, raw refuse, etc.
under the condition of adding an
additive acting as a solidifying
agent, a supporter of combustion
and a counteractive and removing
harmful substance by gasification
from it, it has never generated
harmful gas from the melt which is
melted by heating in case of being
burned.

(2) As it comprises a melting
equipment, a cooling tank and a
transfer equipment, it makes the
equipment so simple and it is
possible to install the equipment
at the low cost.

(3) As it is enough only to add the
additive such as asphalt, etc. to
the waste refuse containing

- 19 -

synthetic resin material, vinyl, etc., it is possible to cut down remarkably the cost of manufacturing fuel. In other words, it is possible to manufacture low-priced fuel having a high calorific value.

(4) Referring to item (3), it is possible to manufacture fuel at the cost similar to the cost of the waste treating heretofore in use. So it is possible to use the waste refuse as the effective resources and it is economical.

(5) It is economical, as the cooling water is re-used by circulation.

(6) Referring to item(5), it is not necessary to worry about the environmental pollution, as the cooling water polluted is not discharged from the system.

Claims:

1. A method of manufacturing fuel
   which comprises the steps of
   (i) heating and melting waste
       refuse made by removing
       noncombustible matter such as
       metal, etc. from industrial
       waste such as shredder dust,
       etc., domestic waste, raw
       refuse, etc. in a melting
       equipment under the condition
       of adding an additive acting as
       a solidifying agent, a
       supporter of combustion and a
       counteractive and removing
       harmful substance by
       gasification from it,
   (ii) solidifying by cooling said
       melt from which said harmful
       gas has been removed in said
       melting equipment in a cooling
       tank in which cooling water of
       pH 8~10 is received,
   (iii) transferring said fuel made up
       by cooling with cooling water
       to a product yard,
   and
   (iv) circulating said cooling water
       from said product yard to said cooling tank passing through an additive receiving tank and keeping pH 8~10 of said cooling water.

2. A fuel manufacturing equipment comprising:

(i) a melting equipment for heating and melting a waste refuse made by removing noncombustible matter such as metal, etc. from industrial waste such as shredder dust, etc., domestic waste, raw refuse, etc. under the condition of adding an additive acting as a solidifying agent, a supporter of combustion and a counteractive and removing harmful sustance by gasification from it,

(ii) a cooling tank for cooling and solidifying said waste refuse melted from which said harmful gas has been removed in said melting equipment by water of pH 8~10,

and

(iii) a transfer equipment of fuel made up by cooling said waste refuse melted in said
cooling tank to a product yard.

3. A methed of manufacturing fuel as
set forth in claim 1, wherein said
additive is made by distribution of
some of waste oil, heavy oil,
asphalt(AS), sp220, pitch, fine
coal, poor-grade coal, magnesium
(Mg), antimony(Sb), calcium oxide
(CaO), calcium hydroxide $Ca(OH)_2$,
silicic acid, etc. at the fixed
portion.

4. A method of manufacturing fuel
set forth in claim 1, wherein said
melting equipment comprising:

(i) a heating chamber which is
heated up by heat from a
combustion furnace,

(ii) No. 1 transfer equipment
installed at the upper portion
inside said heating chamber for
conveying said waste refuse
with said additive by screw
while drying,

(iii) No. 2 transfer equipment
installed at the lower space
than said No. 1 transfer
equipment inside said heating
chamber for conveying said
waste refuse dried at said No. 1 transfer equipment by screw while preheating,

and

(iv) No. 3 transfer equipment installed at the lower space than said No. 2 transfer equipment inside said heating chamber for conveying said waste refuse preheated at said No. 2 transfer equipment by screw while melting.

# Fig.1

## Fig.2

## Fig.3

European Patent
Office

EUROPEAN SEARCH REPORT

0193666

Application number

EP 85 30 1522

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| | | | C 10 L   5/46 |
| A | US-A-4 135 888  (WALTRIP)<br>* Abstract; figures 2,3 * | 1-4 | |
| A | GB-A-2 046 300  (J.P. DRAKE)<br>* Claims 1,2,5,8 * | 1 | |
| A | DE-A-3 111 324  (SCHNICKS)<br>* Claims 1,2 * | 1,3 | |

TECHNICAL FIELDS
SEARCHED (Int. Cl.4)

C 10 L

The present search report has been drawn up for all claims

| Place of search | Date of completion of the search | Examiner |
|---|---|---|
| THE HAGUE | 05-11-1985 | MEERTENS J. |